# EUROPÄISCHE PATENTSCHRIFT

(11) **EP 3 114 003 B1**
(45) Veröffentlichungstag und Bekanntmachung des Hinweises auf die Patenterteilung: **25.04.2018**
(21) Anmeldenummer: 15716718.0
(22) Anmeldetag: 05.03.2015
(51) Int. Cl.: B61F 19/00, B60B 35/16

(54) **RADSATZWELLENSCHUTZ**
AXLE SHIELD
PROTECTION D'ESSIEUX

(30) Priorität: 07.03.2014 DE 202014002014 U; 23.10.2014 DE 202014008476 U
(43) Veröffentlichungstag der Anmeldung: 11.01.2017
(73) Patentinhaber: GMT Gummi-Metall-Technik GmbH, 77815 Bühl (DE)
(72) Erfinder: WALTER, Wilfried, 30966 Hemmingen (DE); BERTHOLD, Karsten, 76275 Ettlingen (DE)
(74) Vertreter: Miller, Andreas
(86) Internationale Anmeldenummer: PCT/DE2015/000101
(87) Internationale Veröffentlichungsnummer: WO 2015/131873

(56) Entgegenhaltungen:
- EP-A1- 1 942 040
- EP-A1- 2 345 491
- WO-A1-00/59764
- WO-A1-2012/007001
- DE-A1-102010 009 437
- DE-A1-102012 205 220
- GB-A- 800 956
- US-A- 2 747 918
- US-A- 4 158 407

## Beschreibung

Die Erfindung betrifft eine Schutzvorrichtung für Radsatzwellen von Schienenfahrzeugen.

Bisher war es üblich, die Radsatzwellen von Schienenfahrzeugen vor Beschädigungen durch aufwirbelnden Gleisschotter, Äste, Eisbrocken und alle anderen Arten von festen Kollisionskörpern durch aufwändige Stoßbleche und zusätzliche aufwändige Beschichtungen aus festem Material zu schützen. Diese Art von Schutz war umständlich und erforderte unverhältnismäßig hohen Aufwand an Zeit und damit Kosten. Außerdem behinderte sie eine einfache Kontrolle und Wartung der Radsatzwellen. In DE102010009437 A1 und DE102012205220 A1 wird daher kostengünstigerer Radwellenschutz durch elastische Abschirmelemente mit Halteeinrichtungen in Form von biegeelastischen Leisten bzw. Elastomermatten vorgeschlagen. Diese bringen zwar gegenüber dem früheren Schlagschutz durch Stoßbleche und ähnliche Vorrichtungen gewisse Vorteile, sind aber immer noch so ausgestaltet, dass sie relativ zeitaufwändig montiert und für Kontrollwartungen demontiert werden müssen.

Das US Patent Nr. 6.568.333 offenbart ebenfalls eine Abdeckung für eine Radachse eines Schienenfahrzeugs. Die Abdeckung besteht aus einer inneren Gummischicht, die durch die äußere schlagfeste Schicht vor Steinschlag geschützt wird. Die Abdeckungen werden durch eine Schraubverbindung befestigt, damit sie bei der Rotation der Achse nicht auf die Achse gleiten können.

Diese Radachsenabdeckung hat den Nachteil, dass ihre feste Verbindung mit der Oberfläche der Achse mangels Belüftungs- und Abflussmöglichkeit zur Ansammlung von Feuchtigkeit zwischen ihrer inneren Schicht und der Achsenoberfläche führt. Die Gefahr von Rostbildung und anschließende Rissbildung ist groß.

Eine Weiterentwicklung stellt die Radachsenabdeckung gem. EP 2345491 dar, die eine Abdeckung aus zwei Halbschalen offenbart, die zum einen die Radachse gegen Steinschlag schützen und zum anderen eine kontinuierliche Belüftung der Radachse ermöglichen soll. Die Belüftung wird erreicht durch die Ausstattung der Innenseite der Abdeckung mit erhabenen, parallelen Rippen, in denen Unterbrechungen vorgesehen sind. Die zwischen den Rippen ausgebildeten Luftkanäle gewährleisten den Luft- und Flüssigkeitsdurchfluss durch einen axial ausgerichteten Querkanal und die Ausführungsformen der Rippen (Ansprüche 1-3, 6-8). Die Radachsenabdeckungen sind aus vernetzten Polyethylen (PEX) gefertigt, sodass gewisse Flexibilität der Abdeckungen gewährt ist.
Die Radachsenabdeckung nach EP 2345491 hat aber den Nachteil der sehr aufwändigen und damit kostenintensiven Konzeption des Belüftungsmechanismus. Die Abdeckteile sind mit zahlreichen Schlitzen, Rippen, Unterbrechungen und Kanälen in verschiedensten Richtungen (auch Querkanäle) ausgestattet, die die Belüftung und Entwässerung ermöglichen sollen. Dies ist nicht nur produktionstechnisch aufwändig und kostspielig. Beachtet werden muss auch das richtige Verhältnis zwischen der Kontaktfläche der Rippen zur Achse einerseits und der Oberfläche der Achse andererseits, damit die erreichte Belüftung nicht zu unerwünscht starken Stoßkräften zwischen Rippen und Achse führt und damit die Stabilität der Radachsenabdeckung gefährdet wird. Außerdem kann eine zu schmale Oberfläche der Rippen zu übermäßigem Verschleiß führen.
Auch das verwendete Material, vernetztes Polyethylen (PEX), ist nicht unproblematisch. Es ist zwar flexibel und geeignet, Schläge und Stöße bis zu einem gewissen Grad ohne Durchschlag auf die Achswelle abzufedern. Bei den gerade bei Schienenfahrzeugen häufig auftretenden starken Steinschlägen und Stößen reicht dies aber nicht aus, sodass Beschädigungen der Achsen zu befürchten sind.
Aufgabe der vorliegenden Erfindung ist es daher, eine verbesserte, sowohl kostengünstigere als auch schlag- und stoßsicherere sowie verformungsresistentere Abdeckung mit geringerem Gewicht für Radachsen von Schienenfahrzeugen bereitzustellen, die gleichzeltig eine kontinuierliche Belüftung und Entwässerung zwischen Radachse und Abdeckung gewährleistet und für eine rationelle, kostengünstige Massenfertigung und Montage geeignet ist,.
Zudem ist es Aufgabe der vorliegenden Erfindung, einen wirksamen Schlagschutz zur Verfügung zu stellen, der leicht durch eine Person ohne besondere Hilfsmittel montiert und für Kontrollwartungen demontiert werden kann.
Diese Aufgaben löst die vorliegende Erfindung durchs einen rohrförmigen, den Konturen der Radsatzwelle angepassten und an den Enden beidseitig ausgeweiteten Hohlkörper, der aus widerstandsfähigen und witterungsbeständigen Elastomeren oder gummierten Cord-Geweben bestehen, die beidseitig einen formfesten, vulkanisiergeeigneten Trägerkörper, aus Streckmetall oder kohlefaserverstärkten Kunststoffgitter - durch Vulkanisieren fest verbunden - umschließen.
Zur leichten Montage durch lediglich einen Monteur ohne besondere Werkzeuge wird der rohrförmige Körper mit beidseitiger Aufweitung vorzugsweise - wie u.a. aus EP 2345491 bekannt - aus zwei zu einem Rohr zusammengefügten Halbschalen bestehend aus einem Trägerkörper mit beidseitig aufgebrachten Elastomer- oder elastomer-durchsetzten (gummierten) Cord-Gewebe-Schichten gebildet, die an den Längsseitenkanten ohne Abstandshalter zusammenstoßen. Dabei erfolgt die Anpassung und Verbindung der Längskanten der beiden Halbschale dadurch, dass die Halbschalen jeweils auf derselben Längsseitenoberkante eine durchgehende 10 bis 30 mm lange Lippe aus gleichmäßig überstehenden Elastomer oder gummierten Cord-Gewebe aufweisen, die die komplementäre, gegenüberliegende, glatte Längsseitenkante der anderen Halbschale ohne Lippe abdeckt. Auf diese Weise wird erreicht, dass nur eine Ausführungsform von Halbschalen notwendig ist und der komplette Radwellenschutz lediglich aus zwei identischen Halbschalen besteht, die seitenverkehrt aneinander gefügt werden. Dies bringt eine zusätzliche Erleichterung in Produktion, Lagerhaltung und Montage mit sich.

Der so aus den beiden Halbschalen passgenau gebildete rohrförmige Hohlkörper wird zusätzlich durch eine Anzahl von - je nach Bedarf 2 bis 6 - Befestigungselementen, vorzugsweise Schlauchschellen, um die Radsatzwelle befestigt, wobei diese durch je zwei parallel verlaufende ringförmige Elastomerwulste auf der Oberseite der Halbschalen geführt und so gegen Verrutschen abgesichert werden. Gleichzeitig decken die Lippen den zwischen den Stoßkanten der Halbschalen je nach Grad des Anziehens der Befestigungselemente entstehenden Längsspaltes so ab, dass ein Eindringen von Schmutz und Flüssigkeiten weitgehend verhindert wird.

Außerdem wird durch den Hafteffekt zwischen der jeweiligen Lippe der einen Halbschale und der jeweiligen lippenlosen Komplementärkante der anderen Halbschale ein ungewolltes Auseinander- oder gar Herabfallen der Halbschalen während der Montage vermieden und der Monteur hat dadurch beide Hände frei und wird so in die Lage versetzt, die Spannelemente, vorzugsweise Schlauchschellen, mit beiden Händen anzubringen. Es wird die werkzeugfreie Vormontage ermöglicht.

Es hat sich überraschend gezeigt, dass es ausreicht, zur inneren Verstärkung der Rohrkörperwände als Kern- und Trägerschicht für die Elastomer- oder gummierten Cord-Gewebeschichten biegsame, strukturierte Gitter aus Metall (Streckmetall) bzw. aus kohlefaserverstärktem Kunststoff (CFK) vorzusehen. Diese Trägermaterialien bringen im Gegensatz zu den vernetzten Polyethylen (PEX) des EP 2345491 neben dem geringen Gewicht eine für besseren Schlagschutz vorteilhafte Steifigkeit und feste Struktur verbunden mit ausreichender Flexibilität und Kraftaufnahmefähigkeit zur Vermeidung von irreversiblen Beschädigungen des Rohrkörpers, wie etwa größere Verformungen, Brüche und/oder Risse.

Außerdem sind auf der Innenseite der zylindrischen Rohrwand axiale Schlitze in die Elastomer- bzw. gummierte Cord-Gewebe-Schicht geformt, durch die aufgrund der Rotation Wasser und ggf. andere Flüssigkeiten herausgeleitet werden. Hierdurch werden die im schrägen Aufweitungsbereich im Gegensatz zum zylindrischen Rohrbereich schwieriger anzubringenden zusätzlichen Abflussbohrungen unnötig, was eine kostengünstigere Produktion ermöglicht. Diese in die Elastomer- bzw. gummierte Cord-Gewebe-Schicht geformten Schlitze haben eine Länge von 20 bis 50 mm, eine Breite von 10 bis 20 mm und eine Tiefe von 2-5 mm.

Zudem sind stirnseitig auf beiden Seiten der Aufweitungen Schlitze in die Elastomer- bzw. Cord-Gewebe-Schicht geformt, damit Wasser oder andere Flüssigkeiten, die dorthin durch die axialen Entwässerungsschlitze aufgrund der Fliehkraft gelangt sind, durch Rotation nach Außen entfernt werden können. Durch diese axial und radial angeordneten Schlitze mit zahnradförmigen Aussparungen wird eine leichte Lösung (Entformbarkeit) der Aussparungen aus der Vulkanisierform erreicht, was ebenfalls zu einer rationellen und kostengünstigen Produktion beiträgt.

Ferner weisen derartige Gitter aus Metall bzw. kohlefaserverstärktem Kunststoff gegenüber entsprechenden Platten aus diesen Werkstoffen einen hohen Umformungsgrad mit dreidimensionaler Formbarkeit ohne Faltenbildung auf. Dies erleichtert die rationelle und somit kostengünstige Herstellung der Halbschalenwände für den Rohrkörper ebenfalls.

Auch die Anbringung der Entwässerungs- und Belüftungsbohrungen wird erleichtert, da Gitter im Zwischenbereich der Streben naturgemäß leichter zu durchbohren sind.

Ferner wird eine haftmittelfreie Aufbringung der Elastomer- oder gummierten Cord-Gewebe-Schichten ermöglicht, was Einsparpotential und geringere Umweltbelastung zur Folge haben kann.

Die offene Struktur dieses Materials ermöglicht nicht nur die gute Haftung der Elastomer- bzw. gummierten Cord-Gewebe-Schichten in der Ebene, sondern erlaubt den auf der Außen- und Innenfläche aufzubringenden Elastomer- bzw. elastomer-durchsetzten (gummierten) Cord-Gewebeschichten auch eine vollständige Durchdringung des Gitters, was sowohl eine höhere Beständigkeit des Rohrkörpers als auch eine höhere Flexibilität und Kraftaufnahmefähigkeit zur Folge hat.

Um eine besonders haftbeständige Verbindung von Trägermaterial und Elastomer- bzw. Cord-Gewebeschichten zu erzielen, wird das Trägermaterial gestrahlt oder phosphatiert und erforderlichen Falls mit einem geeigneten Haftmittel behandelt. Anschließend werden die Elastomer- bzw. elastomer-durchsetzten (gummierten) Cord-Gewebe-Schichten aufvulkanisiert. So wird eine besonders feste und beständige Verbundelastomerschicht erreicht, die im Vergleich zu DE102010009437 A1 und DE102012205220 A1 keiner zusätzlich Schalung oder Befestigung bedarf.

Die ringförmigen, wulstartigen Erhöhungen auf der Außenseite des rohrförmigen Körpers verhindern das Verrutschen der Spannelemente, die vorzugsweise aus handelsüblichen Schlauchschellen bestehen.

Um zu verhindern, dass sich im Zwischenraum zwischen Rohrkörper und Radsatzwelle Feuchtigkeit bildet bzw. Wasser oder andere Flüssigkeiten ansammeln, muss der Zwischenraum mit Hilfe von geeigneten Vorrichtungen am Rohrkörper belüftet und entwässert werden.

Zu diesem Zweck sind in der Verbundelastomer- bzw. gummierten Verbund-Cord-Gewebe-Schicht der konischen Rohrwand - nicht im Aufweitungsbereich - durchgehende Bohrungen vorgesehen, die die Belüftung und das Abfließen von Flüssigkeiten gewährleisten. Diese Bohrungen haben vorzugsweise einen Durchmesser von 3 - 5 mm, sind unregelmäßig angeordnet und sollten einen Abstand von mindestens 50 höchstens 120 mm voneinander haben.

Die Funktionsweise und die Vorteile der Erfindung werden anhand der Zeichnungen unter Verwendung der in der Bezugszeichenliste definierten Bezugszeichen für ein bevorzugtes Ausführungsbeispiel erläutert.

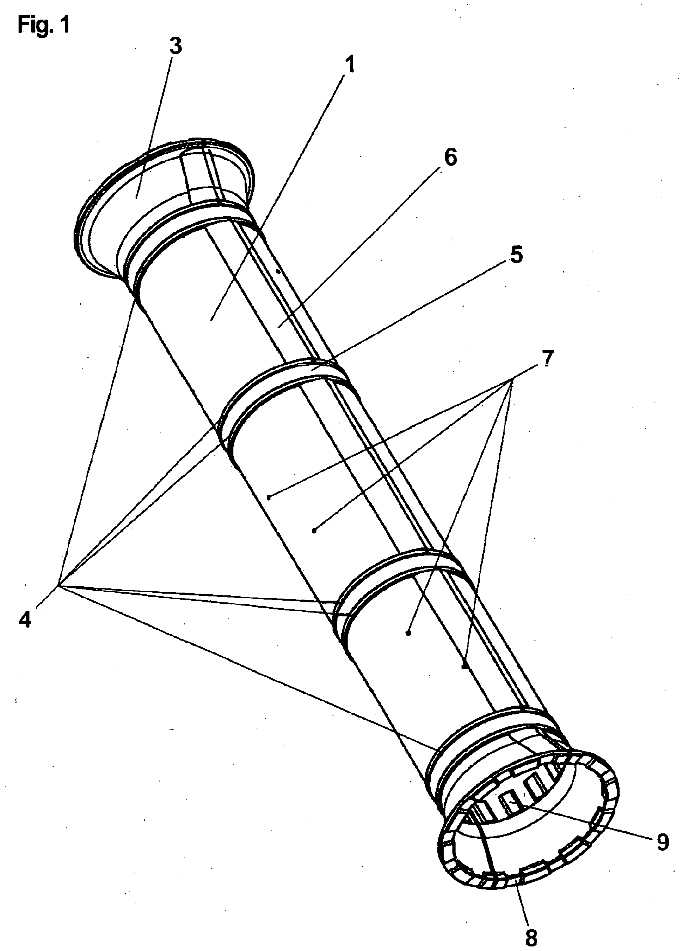

Fig. 1 zeigt in der Gesamtschau die beiden bereits fest miteinander durch die Spannelemente (5) verbundenen Halbschalen (1) des Radwellenschutzelementes. Die parallelen Ringerhöhungen (4) für die Führung der Spannelemente sind sichtbar. Ebenfalls gezeigt werden die Aufweitungen (3) an beiden Enden des Radwellenschutzelementes, mit denen dieses an die Radscheiben bzw. die Bremsscheiben anschließt. Die radialen Schlitze (8) an den Rändern sowie die inneren axialen Schlitze (9)in Form und Lage und sind die im Rohrkörper eingebrachten Abflussbohrungen (7) dargestellt.

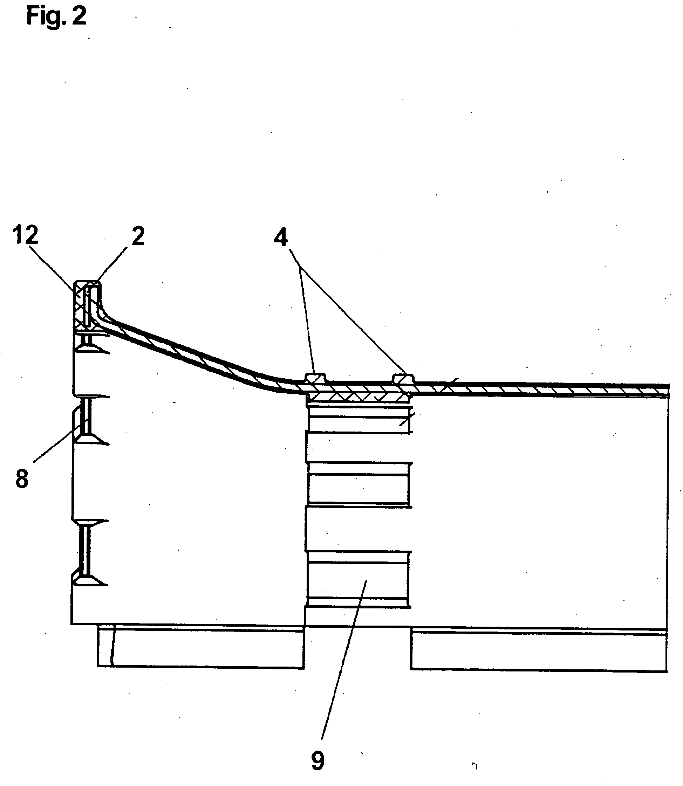

Fig. 2 zeigt einen Querschnitt durch ein Ende des rohrförmigen Radwellenschutzelementes mit Aufweitung (3) mit der randständig verdickten Verbundelastomerschicht (12) mit formfesten Trägerkörper (2). Außerdem werden gezeigt am Rande der Aufweitung (3) die radialen Schlitze (8) und in der inneren Elastomer- bzw. Cord-Gewebe-Schicht im Inneren des Rohrs die am Ende des Rohrs zur Aufweitung hin befindlichen axialen Schlitze (9) sowie die Ringerhöhungen (4).

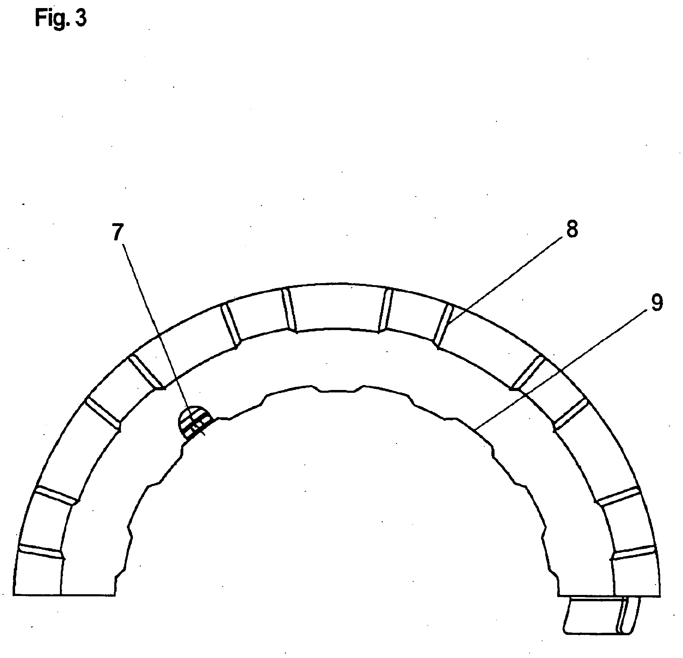

Fig. 3 zeigt in einer Aufsicht auf den Rand der Aufweitung einer Halbschale (1) die sechs radialen (8) und sechs axialen Schlitze (9) sowie im Schnitt die Anordnung einer Abflussbohrung (7) im zylindrischen Rohrbereich.

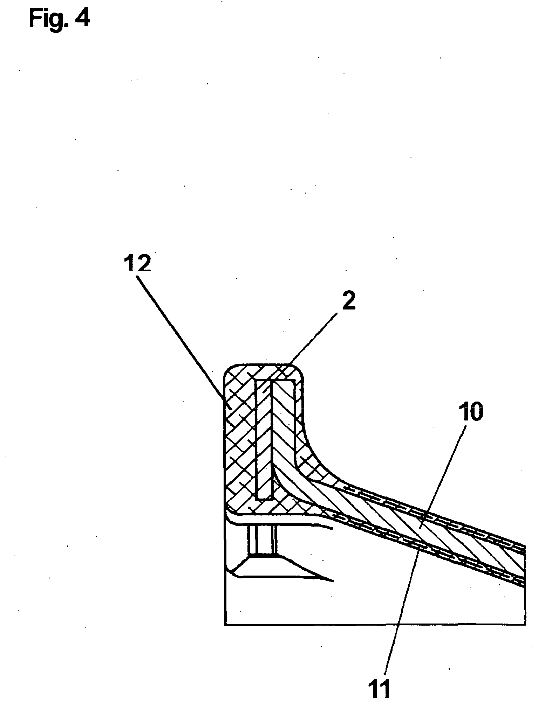

Fig. 4 zeigt den Aufbau der Verbundelastomer- bzw. der gummierten Verbund-Cord-Gewebe-Schicht mit der Trägerschicht aus Streckmetall- oder CFK-Gitter (10), den stirnseitig zur Abstützung einvulkanisierten formfesten Trägerkörper aus Metall oder GFK (2) sowie die beidseitige auf und eingebrachte Elastomer- oder gummierte Cord-Gewebe-Schicht (11).

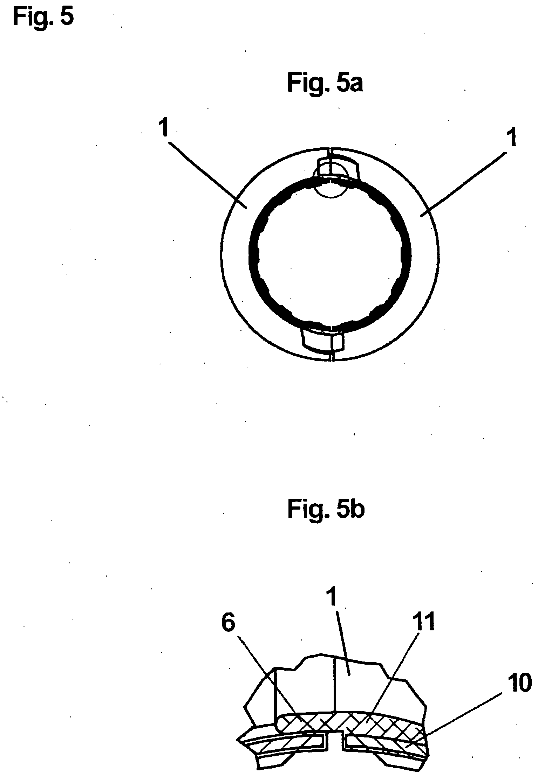

Fig. 5 a zeigt einen Gesamtquerschnitt des aus den zwei Halbschalen (1) zusammengefügten zylindrischen Rohrkörpers des Radwellenschutzelementes mit den aneinander stoßenden Längsstoßkanten der Halbschalen mit und ohne Lippe.

In der Fig. 5b werden diese Funktionsteile und die Anpassung der Längsstoßkanten aus Streckmetall/CFK-Gitter (10) und Elastomerschicht/gummiertes Cord-Gewebe (11) mit und ohne Lippe (6) beim Zusammenfügen der Halbschalen (1) im Detail dargestellt, nämlich das Überlappen der Oberseite der lippenlosen Längsstoßkante der einen Halbschale (1) durch die Lippe (6) der anderen Halbschale (1)

### Bezugszeichenliste zu Radsatzwellenschutz

1. Halbschalen
2. Formfester Trägerkörper
3. Aufweitung
4. Ringerhöhung
5. Spannelemente
6. Elastomer- bzw. gummierte Cord-Gewebe-Lippe
7. Abflussbohrungen
8. Radiale Schlitze
9. Axiale Schlitze
10. Streckmetall-/CFK-Gitter
11. Elastomerschicht/ gummierte Cord-Gewebe-Schicht
12. verdickte, randständige Elastomerschicht/gummierte Cord-Gewebe-Schicht

## Patentansprüche

1. Rohrförmige, aus zwei Halbschalen (1) zusammengefügte Schlagschutzvorrichtung mit beidseitigen trichterförmigen Aufweitungen (3), **dadurch gekennzeichnet, dass** die Rohrwände aus einem formfesten Trägerkörper (2) aus Streckmetall oder kohlefaserverstärktem Kunststoff in Gitterform (10) bestehen, auf den und in den Elastomer oder mit Elastomer durchsetztes Cord-Gewebe (11) dauerhaft auf- bzw. einvulkanisiert ist.

2. Schlagschutzvorrichtung nach Anspruch 1 **dadurch gekennzeichnet, dass** auf je einer Längsseitenkante der Halbschalen (1) die obere Elastomer- oder Cord-Gewebe-Schicht (11) einen durchgehenden, gleichmäßigen Überstand über den Trägerkörper (2) der Rohrwand in Form einer Lippe (6) ausbildet, die die jeweils gegenüberliegende, überstandslose Komplementärkante der anderen Halbschale (1) überlappt und so die Halbschalen (1) der Schlagschutzvorrichtung auf beiden Seiten fest, aber wieder lösbar mit einander verbindet.

3. Schlagschutzvorrichtung nach Ansprüchen 1 bis 2 **dadurch gekennzeichnet, dass** auf der Innenseite der konischen Rohrwand radiale Schlitze (8) in die Elastomer- bzw. in die mit Elastomer durchsetzten Cord-Gewebe-Schicht (11) geformt sind mit einer Länger von 20 bis 50 mm, einer Breite von 10 bis 20 mm und einer Tiefe von 2 bis 5 mm und diese gleichmäßig axial am Rohrende zur Aufweitung (3) im Abstand von 10 bis 20 mm ringförmig angeordnet sind.

4. Schlagschutzvorrichtung nach Ansprüchen 1 bis 3 **dadurch gekennzeichnet, dass** stirnseitig an den äußeren Rändern der Aufweitungen (3) axiale Schlitze (9) in die Elastomerschicht (11) geformt sind.

5. Schlagschutzvorrichtung nach Ansprüchen 1 bis 4 **dadurch gekennzeichnet, dass** in die Verbundelastomer- bzw. gummierte Verbund-Cord-Gewebe-Schicht (11) der konischen Rohrwand durchgehende Bohrungen mit einem Durchmesser zwischen 3 bis 5 mm unregelmäßig mit einem Abstand von 50 bis höchstens 120 mm voneinander angebracht sind.

## Claims

1. Tubular impact protection device made from two half-shells (1) with funnel-shaped expansions (3) on both sides, **characterised in that** the tube walls consist of a rigid support body (2) made from expanded metal or carbon-fibre-reinforced plastic in a grid form (10), onto which and into which elastomer or cord fabric containing elastomer (11) is vulcanised.

2. Impact protection device according to claim 1, **characterised in that** on each longitudinal side edge of the half-shells (1) the upper elastomer or cord fabric layer (11) forms a continuous, even protrusion beyond the support body (2) of the tube wall in the form of a lip (6), which overlaps the opposite, non-protruding complementary edge of the other half-shell (1) and thus connects the half-shells (1) of the impact protection device with each other on both sides securely but detachably.

3. Impact protection device according to claims 1 to 2, **characterised in that**, on the inside of the conical tube wall, radial slits (8) are made into the elastomer or cord fabric layer containing elastomer (11) with a length of 20 to 50 mm, a width of 10 to 20 mm and a depth of 2 to 5 mm and these are arranged evenly and axially at the tube end towards the expansion (3) at a distance of 10 to 20 mm in a ring shape.

4. Impact protection device according to claims 1 to 3, **characterised in that** on the face end on the outer edges of the expansions (3) axial slits (9) are made into the elastomer layer (11).

5. Impact protection device according to claims 1 to 4, characterised that continuous drill holes with a diameter of 3 to 5 mm are irregularly made in the composite elastomer or rubberised composite cord fabric layer (11) of the conical tube wall at a distance of 50 to maximum 120 mm from each other.

## Revendications

1. Dispositif de protection tubulaire constitué de deux demi-coques (1) assemblées ensemble comportant, des deux côtés, des élargissements (3) en forme d'entonnoir, **caractérisé en ce que** les parois du tube sont constituées d'un corps support (2) non déformable en métal déployé ou en matière plastique renforcée par des fibres de carbone se présentant sous forme de grille (10) sur ou dans lequel, de l'élastomère ou un tissu de câbles (11) imprégné d'élastomère est vulcanisé de manière durable sur ou dans ledit corps.

2. Dispositif de protection selon la revendication 1 **caractérisé en ce que** sur respectivement un bord longitudinal des demi-coques (1), la couche d'élastomère ou de tissu de câbles (11) forme une saillie continue, régulière au-dessus du corps support (2) de la paroi de tube sous la forme d'une lèvre (6) qui chevauche le bord complémentaire respectivement opposé sans saillie de l'autre demi-coque (1) et qui relie ainsi de façon fixe, mais redesserrable, les demi-coques (1) du dispositif de protection des deux côtés.

3. Dispositif de protection selon les revendications 1 à 2 **caractérisé en ce que** sur la surface intérieure de la paroi conique de tube sont formées des fentes radiales (8) dans la couche d'élastomère ou de tissu de câbles imprégné d'élastomère (11) placées circulairement à une longueur de 20 à 50 mm, une largeur de 10 à 20 mm et une profondeur de 2 à 5 mm et ceux-ci régulièrement de façon axiale à l'extrémité du tube par rapport vers l'élargissement (3) à une distance de 10 à 20 mm.

4. Dispositif de protection selon les revendications 1 à 3 **caractérisé en ce que**, face frontale, aux bords extérieurs des élargissements (3), des fentes axiales (9) sont formées dans la couche d'élastomère (11).

5. Dispositif de protection selon les revendications 1 à 4 **caractérisé en ce que** des trous continus d'un diamètre de 3 à 5 mm sont réalisés de façon irrégulière à une distance de 50 à au maximum 120 mm entre eux dans la couche d'élastomère composite ou la couche du tissu de câbles composite caoutchouté (11).
